# EUROPÄISCHE PATENTANMELDUNG

(11) **EP 0 620 398 A1**
(43) Veröffentlichungstag der Anmeldung: **19.10.1994**
(21) Anmeldenummer: 94104266.5
(22) Anmeldetag: 18.03.1994
(51) Int. Cl.: F16L 55/165

(54) **Vorrichtung zum nachträglichen Auskleiden einer im Erdreich verlegten Versorgungsleitung**

(30) Priorität: 10.04.1993 DE 4311953
(71) Anmelder: DIGA VERSORGUNGSTECHNIK HOLDING GmbH, D-45307 Essen (DE)
(72) Erfinder: Tiedtke, Manfred, D-45143 Essen (DE)

(57) **Zusammenfassung**

Bei einer Vorrichtung zum nachträglichen Auskleiden einer im Erdreich verlegten Versorgungsleitung durch abschnittsweises Einziehen eines aus Kunststoff und insbesondere Polyethylen bestehenden Rohres ist vor dem Anfang des jeweiligen Abschnittes der Versorgungsleitung eine Heizkammer (1) angeordnet. Das in die Versorgungsleitung einzuziehende Rohr (2) wird unter Wärmebeaufschlagung seiner äußeren Mantelfläche durch die Heizkammer (1) hindurchgeführt, wobei die Heizkammer an ihrem Ende eine mit konisch zulaufenden Stauchflächen (4) versehene Stauchmatrize (3) zur Durchmesserverringerung des in der Heizkammer (1) erwärmten Rohres (2) aufweist. Um mit der Vorrichtung auf dickwandige Kunststoffrohre verarbeiten zu können und auch hierbei die für die anschließende Stauchung erforderliche Durchwärmung der Rohrwand zu erreichen, ist innerhalb des Rohres (2) vor der Stauchmatrize (3) eine zusätzliche Heizeinrichtung (11) angeordnet. Die Heizeinrichtung (11) stützt sich an der Innenwand (16) des Rohres (2) ab und behält ihre axiale Lage während des Hindurchführens des Rohres (2) durch die Heizkammer (1) bei. Die Heizeinrichtung (11) ist vorzugsweise an einem Seil (18) befestigt, welches am hinteren Ende des Rohres (2) aus diesem hinausgeführt und an einem ortsfesten Punkt (20) befestigt ist.

## Beschreibung

Die Erfindung betrifft eine Vorrichtung zum nachträglichen Auskleiden einer im Erdreich verlegten Versorgungsleitung durch abschnittsweises Einziehen eines aus Kunststoff und insbesondere Polyethylen bestehenden Rohres, mit einer vor dem Anfang des jeweiligen Abschnitts der Versorgungsleitung angeordneten Heizkammer, durch die das Rohr unter Wärmebeaufschlagung seiner äußeren Mantelfläche hindurchgeführt wird, und an deren Ende eine mit konisch zulaufenden Stauchflächen versehene Stauchmatrize zur Durchmesserverringerung des in der Heizkammer erwärmten Rohres angeordnet ist.

Eine solche Vorrichtung ist aus der EP-0 233 006 B1 bekannt. Das zur Auskleidung der im Erdreich verlegten Versorgungsleitung dienende Rohr wird vor der Einzugsstelle durch eine Heizkammer geführt, an deren Ende sich die Stauchmatrize befindet. In der Heizkammer wird das durchlaufende Rohr von außen erwärmt und hierbei die Festigkeit des verwendeten Polyethylens herabgesetzt. Beim Hindurchziehen des Rohres durch die anschließende Stauchmatrize läßt sich der Außendurchmesser des Rohres dann ohne große Zugkraft auf eine Größe verringern, die geringer ist als der Innendurchmesser der auszukleidenden Versorgungsleitung. Das auf diese Weise allseits gestauchte Rohr wird dann mittels eines bereitgehaltenen Seils in die Versorgungsleitung eingezogen. Nachdem das Rohr seine endgültige Position in der Versorgungsleitung erreicht hat, wird das Rohr mittels Druckluft expandiert, bis es sich fest an die Innenwand der Versorgungsleitung anlegt und diese damit dauerhaft auskleidet.

Während sich mit dieser bekannten Vorrichtung bei dünnwandigen Rohren sehr gute Ergebnisse erzielen lassen, treten bei Verwendung dickwandiger Rohre mit Wanddicken von über 20 mm Schwierigkeiten auf. Die Rohrwand erreicht dann in der Heizkammer nicht mehr die erforderliche Durchwärmung, um anschließend mit vertretbarem Kraftaufwand durch die Stauchmatrize hindurchgezogen werden zu können. Zwar wäre es grundsätzlich möglich, die Zugkraft der zum Hindurchziehen des Rohres durch die Heizkammer verwendeten Seilwinde zu erhöhen, jedoch würde dies in dem bereits erwärmten Rohr zu unzulässig hohen Zugspannungen führen. Die Folge wäre eine plastische Längsverformung des Rohres, so daß dieses anschließend nicht in der gewünschten Weise expandiert werden könnte.

Der Erfindung liegt die **Aufgabe** zugrunde, die aus der EP-0 233 006 B1 bekannte Vorrichtung zum nachträglichen Auskleiden einer im Erdreich verlegten Versorgungsleitung so weiterzubilden, daß sich damit auch dickwandige Kunststoffrohre verarbeiten lassen, ohne daß die beim Einziehen des Rohres in die Versorgungsleitung auftretenden Kräfte zu unzulässig hohen Spannungen in dem Rohr führen.

Zur **Lösung** dieser Aufgabe wird bei einer Vorrichtung der eingangs genannten Art vorgeschlagen, daß innerhalb des Rohres vor der Stauchmatrize eine zusätzliche Heizeinrichtung angeordnet ist, die sich an der Innenwand des Rohres abstützt und ihre axiale Lage während des Hindurchführens des Rohres durch die Heizkammer beibehält.

Eine solche Vorrichtung ermöglicht eine wesentlich bessere Durchwärmung der Wand des Rohres als dies bei der bekannten Vorrichtung der Fall ist. Auf diese Weise lassen sich auch dickwandige Rohre mit Wanddicken von über 20 mm verarbeiten, ohne daß die Geschwindigkeit, mit der das Rohr durch die Heizkammer hindurch und in die Versorgungsleitung hinein geführt wird, verringert werden muß. Insbesondere wird vermieden, daß die aus der Heizkammer austretende Rohrlänge unzulässig hohen Zugspannungen ausgesetzt ist.

Eine besonders gleichmäßige Durchwärmung der Wand des Rohres wird erreicht, wenn gemäß einer Weiterbildung der Erfindung die Heizeinrichtung sich unmittelbar vor der Stelle befindet, an der das Rohr in die Heizkammer eintritt.

Mit der Erfindung wird ferner vorgeschlagen, daß zur axialen Lagesicherung der Heizeinrichtung diese an einem Seil befestigt ist, welches am hinteren Ende des Rohres aus diesem hinausgeführt und an einem ortsfesten Punkt befestigt ist. Bei dem ortsfesten Punkt kann es sich beispielsweise um einen Erdanker handeln.

Gemäß einer bevorzugten Ausgestaltung der Erfindung ist die Heizeinrichtung langgestreckt ausgebildet, und sie stützt sich an ihrem vorderen sowie ihrem hinteren Ende mittels Stützelementen an der Innenwand des Rohres ab. Auf diese Weise sind keine Maßnahmen erforderlich, um die lediglich an dem ortsfesten Punkt befestigte Heizeinrichtung in eine definierte Lage zu dem Rohr zu bringen. Vielmehr zentriert sich die Heizeinrichtung von selbst in dem Rohr. Dies läßt sich noch durch frei drehbare Rollen als Stützelemente verbessern.

Mit der Erfindung wird ferner vorgeschlagen, daß die Heizeinrichtung an ihren Enden mit scheibenförmigen, an der Innenwand des Rohres anliegenden Dichtungen versehen ist. Diese Dichtungen verhindern Wärmeverluste durch axiale Luftströmungen im Rohr.

Eine ausreichende Zentrierung der Heizeinrichtung innerhalb des Rohres sowie eine gute Abdichtung zur Vermeidung von axialen Wärmeverlusten läßt sich auf technisch einfache Art und Weise dadurch erreichen, daß die Heizeinrichtung an ihren Enden mit Abschlußplatten versehen ist, an denen die Rollen und Dichtungen befestigt sind.

Ferner wird vorgeschlagen, daß die Heizeinrichtung einen langgestreckten elektrischen Heizleiter aufweist, vorzugsweise in Gestalt einer Heizwendel. Auf diese Weise wird eine besonders gleichmäßige Wärmebeaufschlagung der Innenwand des Rohres erreicht. Die Stromzufuhr zum Heizleiter erfolgt hierbei vorzugsweise über das Seil, so daß sich die Heizleistung der Heizeinrichtung von außen auf einfache Art und Weise regeln läßt.

Weitere Einzelheiten und Vorteile des Gegenstandes der Erfindung ergeben sich aus der nachfolgenden Erläuterung eines in der Zeichnung dargestellten Ausführungsbeispieles. Darin zeigen:
- Fig. 1: Eine Vorrichtung zum nachträglichen Auskleiden einer im Erdreich verlegten Versorgungsleitung mit einer der Versorgungsleitung vorgeschalteten Heizkammer, durch die das in die Versorgungsleitung einzuziehende Rohr hindurchgeführt ist und
- Fig. 2: in einer Detaildarstellung die Einzelheit II der Fig. 1.

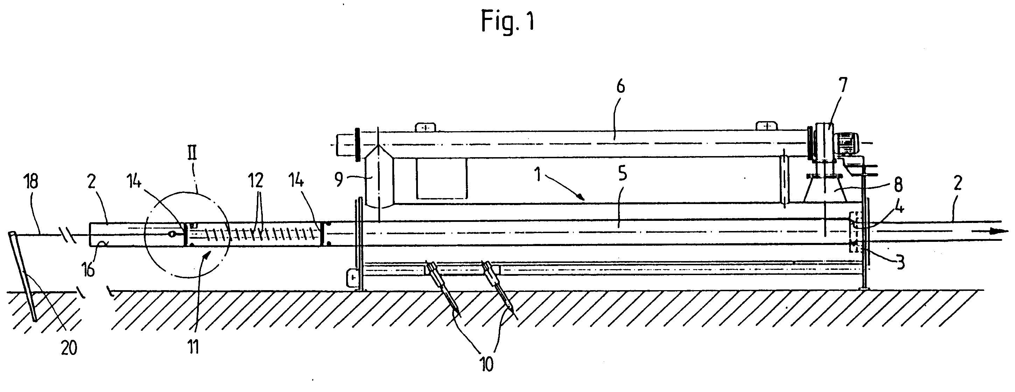

In Fig. 1 ist eine langgestreckte Heizkammer 1 dargestellt, welche Bestandteil einer Vorrichtung zum nachträglichen Auskleiden einer im Erdreich verlegten Versorgungsleitung ist. Ein dem Auskleiden der Versorgungsleitung dienendes Rohr 2 aus Polyethylen wird in Form eines langen Rohrabschnittes durch die Heizkammer 1 hindurchgeführt und erwärmt sich hierbei soweit, daß anschließend in einer Stauchmatrize 3 eine Verringerung des Durchmessers des Rohres 2 möglich wird. Hierzu ist das Rohr 2 in einer in der EP 0 233 006 B1 näher erläuterten Art und Weise an einem Zugseil festgebunden, und wird zunächst durch die Heizkammer 1 sowie die Stauchmatrize 3 hindurch und anschließend in die auszukleidende Versorungsleitung hineingezogen. Da der Anfangsdurchmesser des Rohres 2 in der Regel größer ist als der Innendurchmesser der Versorgungsleitung, z.B. eines Versorgungs- oder Abflußrohres, muß dieser Durchmesser zunächst reduziert werden. Hierzu dient die mit konischen Stauchflächen 4 versehene Stauchmatrize 3. Nachdem das Rohr 2 am Ende der Heizkammer 1 durch die erzeugte Erwärmung weich geworden ist, läßt sich das Rohr 2 anschließend mit relativ geringem Kraftaufwand durch die Stauchmatrize 3 mit den Stauchflächen 4 ziehen und hierbei in seinem Durchmesser verringern. Anschließend gelangt das Rohr 2 dann in die Versorgungsleitung und wird dort auf an sich bekannte Art und Weise pneumatisch bis zur Anlage an der Innenwand der Versorgungsleitung expandiert.

Die Heizkammer 1 setzt sich aus einem langgestreckten Heizraum 5 und einem hierzu parallel angeordneten Brennerraum 6 zusammen. In dem Brennerraum 6 wird mittels eines Gasbrenners ein Heißgasstrom erzeugt, der über ein am Ende des Brennerraums 6 angeordnetes, motorbetriebenes Gebläse 7 und einen Querkanal 8 in den Heizraum 5 gelangt. Die heiße Luft strömt dann entlang des langgestreckten Heizraumes 5, durch den zugleich das Rohr 2 hindurchgeführt wird. Die auf diese Weise an der äußeren Mantelfläche des Rohrs 2 vorbeistreichende Heißluft erwärmt das Rohr 2 von außen. Am rückwärtigen Ende des Heizraumes 5 ist dieser über einen weiteren Querkanal 9, der als Rückführung für die restliche Heißluft dient, wieder mit dem Brennerraum 6 verbunden.

Beim Ausführungsbeispiel ist die Stauchmatrize 3 am Auslaufende des Heizraumes 5 angeordnet und bildet somit einen Teil der Heizkammer 1. Um ein Verschieben der Heizkammer 1 aufgrund der auf das Rohr 2 aufgebrachten Zugkraft zu vermeiden, ist die Heizkammer 1 mittels Erdankern 10 im Untergrund verankert.

Da die Erwärmung der äußeren Mantelfläche des Rohrs 2 in dem Heizraum 5 für eine Durchwärmung von Rohren 2 mit dicken Rohrwänden nicht ausreicht, ist zusätzlich zu der Heizkammer 1 eine weitere Heizeinrichtung 11 vorgesehen. Diese befindet sich, wie Fig. 1 erkennen läßt, innerhalb des Rohres 2 unmittelbar vor Eintritt in den Heizraum 5 der Heizkammer 1.

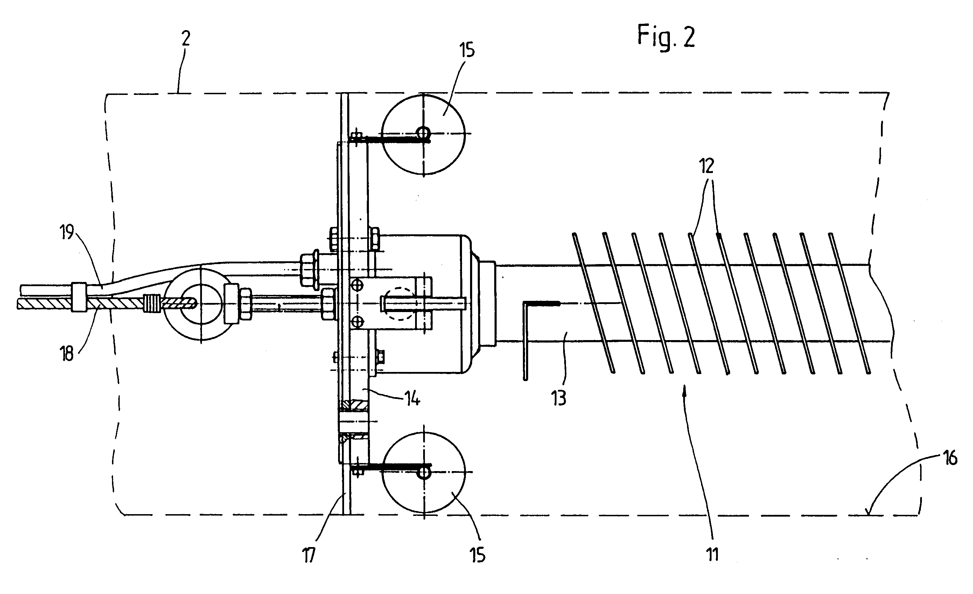

In Fig. 2 ist dargestellt, daß die Heizeinrichtung 11 mit einer elektrischen Heizwendel 12 arbeitet, die auf einem zentralen Rohr 13 befestigt ist. Das zentrale Rohr 13 ist an beiden Enden mit kreisförmigen Abschlußplatten 14 aus Kunststoff verschraubt, wobei am Umfang jeder Abschlußplatte 14 insgesamt vier frei drehbar gelagerte Kunststoffrollen 15 befestigt sind. Die Abschlußplatte 14 dient außerdem als Träger für eine an der Innenwand 16 des Rohres 2 anliegende, scheibenförmige Dichtung 17 aus flexiblem Gummi. Die Dichtung 17 sowie die Kunststoffrollen 15 erstrecken sich in etwa gleich weit radial nach außen, so daß sich die Heizeinrichtung 11 an der Innenwand 16 des Rohres 2 entlangbewegen läßt, wobei die Abstützung der Heizeinrichtung 11 durch die Kunststoffrollen 15 erfolgt, während die die Heizeinrichtung 11 zu beiden Enden hin abschließende Dichtung 17 Wärmeaustritte in axialer Richtung vermeidet. Die von der Heizwendel 12 erzeugte Heizenergie steht also nahezu verlustfrei in dem durch die Abschlußplatten 14 bzw. Dichtungen 17 begrenzten Heizraum zur Verfügung.

Die Heizeinrichtung 11 ist mittels eines Seiles 18, an dem auch das Kabel 19 für die Stromzufuhr befestigt ist, an einem ortsfesten Punkt in Gestalt eines Erdankers 20 befestigt. Das Seil 18 sowie das daran befestigte Kabel 19 sind länger als die in der Heizkammer 1 verarbeiteten Rohre 2 in Form von Rohrabschnitten. Um jeweils ein neues Rohr 2 in die Heizkammer 1 einführen zu können, sind Seil 18 und Kabel 19 an zumindest einer Stelle auftrennbar.

## Patentansprüche

1. Vorrichtung zum nachträglichen Auskleiden einer im Erdreich verlegten Versorgungsleitung durch abschnittsweises Einziehen eines aus Kunststoff und insbesondere Polyethylen bestehenden Rohres, mit einer vor dem Anfang des Jeweiligen Abschnitts der Versorgungsleitung angeordneten Heizkammer (1), durch die das Rohr (2) unter Wärmebeaufschlagung seiner äußeren Mantelfläche hindurchgeführt wird, und an deren Ende eine mit konisch zulaufenden Stauchflächen (4) versehene Stauchmatrize (3) zur Durchmesserverringerung des in der Heizkammer (1) erwärmten Rohres (2) angeordnet ist,
**dadurch gekennzeichnet,**
daß innerhalb des Rohres (2) vor der Stauchmatrize (3) eine zusätzliche Heizeinrichtung (11) angeordnet ist, die sich an der Innenwand (16) des Rohres (2) abstützt und ihre axiale Lage während des Hindurchführens des Rohres (2) durch die Heizkammer (1) beibehält.

2. Vorrichtung nach Anspruch 1, dadurch gekennzeichnet, daß sich die Heizeinrichtung (11) unmittelbar vor der Stelle befindet, an der das Rohr (2) in die Heizkammer (1) eintritt.

3. Vorrichtung nach Anspruch 1 oder Anspruch 2, dadurch gekennzeichnet, daß zur axialen Lagesicherung der Heizeinrichtung (11) diese an einem Seil (18) befestigt ist, welches am hinteren Ende des Rohres (2) aus diesem hinausgeführt und an einem ortsfesten Punkt (20) befestigt ist.

4. Vorrichtung nach einem der Ansprüche 1 bis 3, dadurch gekennzeichnet, daß die Heizeinrichtung (11) langgestreckt ausgebildet ist und sie sich an ihrem vorderen sowie ihrem hinteren Ende mittels Stützelementen (15) an der Innenwand (16) des Rohres (2) abstützt.

5. Vorrichtung nach Anspruch 4, gekennzeichnet durch frei drehbare Rollen als Stützelemente (15).

6. Vorrichtung nach einem der Ansprüche 4 oder 5, dadurch gekennzeichnet, daß die Heizeinrichtung (11) an ihren Enden mit scheibenförmigen, an der Innenwand (16) des Rohres (2) anliegenden Dichtungen (17) versehen ist.

7. Vorrichtung nach Anspruch 6, dadurch gekennzeichnet, daß die Heizeinrichtung (11) an ihren Enden mit Abschlußplatten (14) versehen ist, an denen die Rollen (15) und Dichtungen (17) befestigt sind.

8. Vorrichtung nach einem der Ansprüche 1 bis 7, dadurch gekennzeichnet, daß die Heizeinrichtung (11) einen langgestreckten elektrischen Heizleiter (12) aufweist, vorzugsweise in Gestalt einer Heizwendel (12).

9. Vorrichtung nach Anspruch 8, dadurch gekennzeichnet, daß die Stromzufuhr zum Heizleiter (12) über das Seil (18) erfolgt.
